# EUROPEAN PATENT SPECIFICATION

(11) **EP 3 457 664 B1**
(45) Date of publication and mention of the grant of the patent: **06.11.2019**
(21) Application number: 17191041.7
(22) Date of filing: 14.09.2017
(51) Int. Cl.: H04L 29/08, H04W 4/60, H04W 36/32

(54) **METHOD AND SYSTEM FOR FINDING A NEXT EDGE CLOUD FOR A MOBILE USER**
VERFAHREN UND SYSTEM ZUM FINDEN EINER NEXT-EDGE-CLOUD FÜR EINEN MOBILEN NUTZER
PROCÉDÉ ET SYSTÈME POUR TROUVER UN NUAGE PÉRIPHÉRIQUE SUIVANT POUR UN UTILISATEUR MOBILE

(43) Date of publication of application: 20.03.2019
(73) Proprietor: Deutsche Telekom AG, 53113 Bonn (DE)
(72) Inventor: Roshandel, Mehran, 13591 Berlin (DE); Mashhadi Sohi, Soroush, 14195 Berlin (DE)
(74) Representative: Vossius & Partner Patentanwälte Rechtsanwälte mbB

(56) References cited:
- WO-A1-2015/099587
- WO-A1-2016/134772
- US-A1- 2014 287 754
- "Mobile Edge Computing (MEC); Framework and Reference Architecture", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. MEC, no. V1.1.1, 1 March 2016 (2016-03-01), XP014274003,
- ZTE CORPORATION: "MEC0018 v0.3.0 draft", ETSI DRAFT; MEC(17)000220, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG - MEC - Mobile-Edge Computing 22 March 2017 (2017-03-22), pages 1-50, XP014289563, Retrieved from the Internet: URL:docbox.etsi.org\ISG\MEC\05-Contributio ns\2017\MEC(17)000220_MEC0018_v0_3_0_draft \MEC(17)000220_MEC0018_E2EMobility v030 draft\MEC-0018 E2EMobility v030 cm.docx [retrieved on 2017-03-22]

## Description

The invention relates to the field of telecommunication, in particular to the filed of mobile telecommunication network infrastructure.

The next mobile network generation (5G) provides users with high-speed Internet and lower latency for the communication between a mobile user devices and mobile telecommunication networks.

The network enables the transfer of computational tasks to a nearest Mobile Radio Access Network (RAN) [1] and to take advantage of the computational power of a mobile base station, which is located on the edge of the network, to compute the computational tasks offloaded from applications running on the mobile user devices.

In the context of a future network, Mobile Edge Computing (MEC) is referring to the above mentioned process of offloading computational tasks into a mobile base station and using the benefits of computational power and storage capabilities at the mobile base station.

The ever increasing computational demands of applications on mobile devices, such as smartphones or cars, is consuming increasing amounts of energy. On the other hand, said devices are mainly using limited power sources like batteries, therefore it is important to reduce the energy consumption. By using MEC the mobile device may offload computational tasks to other devices and therefore save energy.

The mobile device usually connects to the nearest base station on the Radio Access Network and transfers the computational task to the edge cloud. Since the mobile device moves and the distance from the base station may change, it is required that the computational data is transferred from the original base station to a base station, which will be closer to the mobile device and to perform the computational task using the resources at the next station.

Finding the next closest and best edge cloud to the mobile device and transferring the processing data to it, is accompanied with high latency. However, such high latency is not desired in Mobile Edge Cloud (MEC) technology.

Reference [2] relates to vehicles with computation and storage capacities that can be used as a cloud by other vehicles locally with less delay instead of sending the data to internet and using internet clouds with a higher delay.

A group of papers tries to minimize energy consumption by the offloading tasks and data transmission to edge cloud. Reference [3] relates to offloading computation tasks to the computing access point as a cloud to decrease the power consumption of each user for these tasks and to minimize the delay in computations for each mobile user. Reference [4] is focused on optimizing the energy consumption of offloading tasks to the edge cloud and optimization of radio resource allocation. Since the power resource on mobile devices using 5G is limited, an energy-efficient MEC offloading mechanism for mobile devices in 5G heterogeneous networks is presented. In [5] an algorithm is introduced, which jointly decides the offloading decision, the CPU-cycle frequencies for mobile execution, and the transmission power for the computation offloading. In [6] a framework for the android applications running on mobile device is presented.

Paper [7] takes advantages from processing capacity of mobile devices as a collective processing unit. It offers offloading the computational tasks to nearby mobile devices and to use them as an edge cloud.

Paper [8] propose an approach for computation offloading decision making problem between distributed multi user system based on game theory.

WO 2015/099587 A1 relates to a mobility managing node comprising a processing unit and a memory, which memory contains instructions executable by the processing unit, whereby the mobility managing node is operative to acquire information indicating to which network node the mobile terminal is to be handed over from a network node currently serving the mobile terminal, and initiate transfer of an application software to the network node to which the mobile terminal is to be handed over.

"Mobile Edge Computing (MEC); Framework and Reference Architecture", ETSI GS MEC-003 V1.1.1, March 1, 2016; relates, in section A.4.2.2.2, user equipment moving around in a mobile network, and another (target) mobile edge host being identified as being a more appropriate location for a mobile edge application to serve the user equipment instead.

"Mobile Edge Computing (MEC); End to end mobility aspects", ETSI GR MEC-018 v0.3.0 draft, March 22, 2017; relates in section 4.3 to the prediction of handover timing in a connected car use case with the transit time in each cell being estimated by the assistance of a user equipment application or by a MEC-based solution. The location service may also support prediction of the handover timing by retrieving the location information of the user equipment and radio nodes.

It is an object of the invention to provide an improved method and system for finding a next edge cloud for a mobile user device. This object is achieved with the features of the subject-matter of the independent claims. The dependent claims define preferred embodiments.

The invention provides a method for finding a next edge cloud for a mobile user device in a mobile communication network for cloud processing,
wherein the network comprises at least two base stations with computing access point functionality and the base stations being part of a mobile edge computing, MEC, cloud,
wherein the method comprises the steps of:
   a) the mobile user device sending a request for usage privilege for cloud processing to a connecting base station,
   b) the connecting base station accepting the cloud processing request,
   c) the mobile user device offloading the computation processing data to the mobile edge computing cloud via the connecting base station and the mobile user device also sending localization information to the base station,
   d) the mobile edge computing cloud processing the computation processing data and determining an expected next base station based on the received localization information,
   e) the mobile edge computing cloud delivering the processed computation processing data to the determined expected next base station, when the user mobile device has moved from the network cell serviced by the connecting base station to the network cell of the determined expected next base station or to the connecting base station, when the mobile user device has not moved out of the network cell serviced by the connecting base station.

In one aspect of the invention the localization information comprises information about a position of the mobile user device, preferably a GPS position the mobile user device. In an alternative embodiment, the localization information comprises navigation data about a route or destination of the mobile user device. In a further alternative embodiment, the localization information comprises the position information and the navigation data.

In one aspect of the invention the localization information comprises information navigation data about a route or destination of the mobile user device.

In one aspect of the invention in the delivering step the mobile edge computing cloud predicts a possible route of the mobile user device based on the current localization information of the mobile user device with a machine learning algorithm, and herein for each mobile user device a history of localization is stored in the mobile edge computing cloud.

In one aspect of the invention in the delivering step the mobile edge computing cloud predicts a possible route of the mobile user device based on a history of localization information of the mobile user device with a machine learning algorithm, and wherein for each mobile user device a history of localization is stored in the mobile edge computing cloud.

In one aspect of the invention after the mobile user device sending a request for usage privilege the connecting base station determines based on usage capacity of the mobile edge computing cloud, the connecting base station, or both whether the request for usage privilege is accepted or not.

In one aspect of the invention the request for usage privilege is forward by the connecting base station to a neighboring base station and the neighboring base station becomes the connecting base station.

The invention further provides a system for finding a next edge cloud for a mobile user device in a mobile communication network for cloud processing, wherein the network comprises at least two base stations with computing access point functionality and the base stations being part of a mobile edge computing, MEC, cloud, wherein the system comprises a request reception unit formed at each base station, which is configured to receive a request for usage privilege for cloud processing sent from the mobile user device to a connecting base station, wherein the system further comprises a request evaluation unit formed at each base station, which is configured to determine based on usage capacity of the mobile edge computing cloud and/or the connecting base station whether the request for usage privilege is accepted or not. wherein the mobile user device is configured to offload the computation processing data to the mobile edge computing cloud via the connecting base station and the mobile user device is also configured to send localization information to the base station, wherein the mobile edge computing cloud is configured to process the computation processing data, wherein the system comprises a prediction unit, preferably formed at the mobile edge computing cloud, which is configured to determine an expected next base station based on the received localization information, and wherein the mobile edge computing cloud is configured to deliver the processed computation processing data to the determined expected next base station, when the user mobile device has moved from the network cell serviced by the connecting base station to the network cell of the determined expected next base station or to the connecting base station, when the mobile user device has not moved out of the network cell serviced by the connecting base station.

In one aspect of the invention the request evaluation unit is configured to forward the request for usage privilege to a neighboring base station and the neighboring base station becomes the connecting base station, when the request cannot be accepted at the current connecting base station.

In one aspect of the invention the localization information comprises information about a position of the mobile user device, preferably a GPS position the mobile user device, and/or navigation data about a route or destination of the mobile user device.

In one aspect of the invention the localization information comprises information navigation data about a route or destination of the mobile user device.

In one aspect of the invention the prediction unit is configured to predict a possible route of the mobile user device based on the current localization information of the mobile user device with a machine learning algorithm, and wherein the mobile edge computing cloud is configured to store for each mobile user device a history of localization.

In one aspect of the invention the prediction unit is configured to predict a possible route of the mobile user device based on a history of localization information of the mobile user device with a machine learning algorithm, an wherein the mobile edge computing cloud is configured to store for each mobile user device a history of localization.

It is a general inventive concept of the invention to estimate the most closest and best base station based on a current location of the mobile device.

In one embodiment of the invention a mobile node, i.e. the mobile user device, such as a smartphone, requires the use the edge cloud for processing tasks. The mobile device would request from a connecting base station the usage privilege for the edge cloud and send the mobile devices' GPS data to the base station.

The connecting base station would make a decision whether to accept the request or reject it based on the capacity of edge cloud on the connecting base station. If there is not enough capacity to support the mobile device in the edge cloud, the request would be rejected and the connecting base station would introduce at least one neighboring base station.

If there is capacity on edge cloud the request would be accepted and an application on the mobile device would start offloading the computation processing data to the edge cloud and also send the mobile device's GPS data and navigation data to the edge cloud.

On the edge cloud side the data of mobile user device is processed and parallel to the processing the base station base on the location information finds the next nearest and best edge cloud to the mobile user device based on an estimation of the route of the mobile user device.

In one embodiment of the invention the connecting base station would estimate based on many factors the possible route of the mobile user device and predict the best possible nearest next base station of the mobile user device. When the processing the data is not yet finished and the mobile device is distancing from the connecting base station, according to the invention the mobile user device's data is delivered to the next base station and the proceeding would be performed and/or continued on the next base station.

In one embodiment of the invention the system estimates the route with known GPS-data and estimates the speed and change of direction to predict the possible route and/or also compares it to the history of the navigation routes of the mobile user device. Each mobile user device has a history of its navigation while it uses the edge cloud. This data is saved on the edge cloud server to help the route estimation process, to find the behavior of the mobile user device based on machine learning, and to learn how frequently and where the mobile user device would use the edge cloud and for how long.

In further embodiments of the invention the following cases are considered:
1. Some mobile user device may have very random movements:
   This relates to drones or passersby in the fields, the system would build up a vector of very first movements and try with help of machine learning to estimate a virtual route of the mobile user device and estimate the best and nearest edge cloud based on that information.
2. Some mobile user devices primarily move along roads or railroads:
   In this case the estimation is easier than in the first case, because the movement possibilities are more limited and the system would consider the roads in the machine learning process to estimate the next base station faster and better.
3. The system learns and saves the routes of specific mobile user devices which are often chosen relating to a way to work, home, school, and also weekly or monthly visits to a doctor or a dentist and these routes are considered in the algorithm to estimate the route faster.

The invention will now be described in more detail with reference to the accompanying figures.
- Fig. 1: shows an illustration of the system according to an embodiment of the invention; and
- Fig 2: shows a flow chart of the method according to an embodiment of the invention.

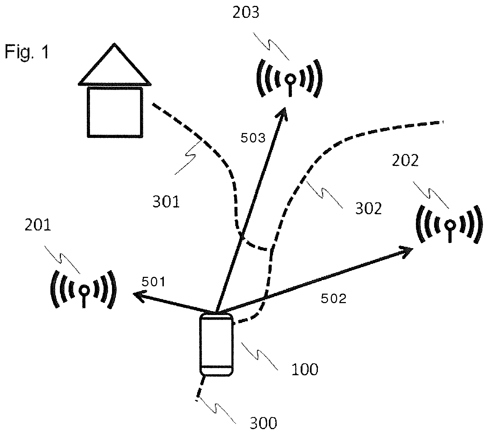

In Fig. 1 an illustration of the system according to an embodiment of the invention is shown, which is considering a smartphone 100 as a mobile user device. The smartphone 100 may be located in a car and the smartphone 100 may request to use the edge cloud for gaming purpose. Nowadays some online gaming with a sophisticated graphics requires processing power and since battery power of smartphones is limited, therfore the usage of edge cloud is a realistic scenario.

The edge cloud is comprised of a plurality of cloud locations, which are interconnected to form a cloud themselves. Said cloud locations are preferably located at base stations 201, 202, 203 of the mobile telecommunication network. However, the invention also comprises embodiments in which the cloud locations are formed elsewhere and are merely connected to one or more of the base stations 201, 202, 203.

In this scenario the mobile user device 100 has three different distances 501, 502, 503 to each of the corresponding base stations 201, 202, 203. The mobile user device 100 in the car currently moves on route 300 and has two possibilities to choose between routes 301 or 302.

Currently distance 501 to base station 201 is the shortest one at the start moment. All three base stations 201, 202, and 203 are covering the smart phone 100 with network access at all times. The smartphone 100 requests from base station 201 to use the edge cloud since this base station is the nearest to the mobile user device and has the capacity to provide mobile user device with edge cloud service.

The mobile user device starts to offload processing data to base station 201. However the mobile user device moves, and therefore the location of mobile user device changes with time. The system according to the invention therefore parallel to the processing of the mobile user device's data starts to find the next best and nearest base station to the mobile user device. If the mobile user device has a behavior history on the system, the estimation of the possible route and the nearest base station close to that possible route may be easier and faster.

For example it is considered that the system estimates the routes with following possibilities:
The possibility of choosing the route 301 is 80% and the choosing route 302 is 20%. Since the system based on changes of the location of the mobile user device and the time of day and the history of mobile user device on the system knows that at this time of day the mobile user device would go home and the home is on route 301.

Accordingly the system starts to deliver the processing data of the mobile user device to the base station 203 hence this base station is the next nearest and best edge cloud provider to the mobile user device on route 301.

Given that more distance of mobile user device to the base station means more power consumption for communications with that base station. Although all 3 base stations are covering the smart phone, the closest one is always the best one.

In other words, while the mobile user device uses the mobile edge cloud and starts to offload the computational task to the nearest radio access network (base station of mobile network), parallel to the processing of the offloaded data the system will start the process of predicting the next best and the nearest base station to mobile user device according to GPS-Navigation data of the mobile user device and the mobile user device's behavior.

The system needs to have the location data of the mobile user device to estimate the most possible route the mobile user device would choose and predicts the best and the nearest base stations for the mobile user device.

Additionally, with help of machine learning algorithms the system learns the usual location, usual speed, and the usual behavior of the specific mobile user device based on e.g. past selections of the routes that have been chosen every day or each time mobile user device uses the edge cloud. The system also saves this behavior data in memory and builds up a history. Consequently therefore the estimation process becomes easier and faster for the next time the mobile user device will use the mobile edge cloud.

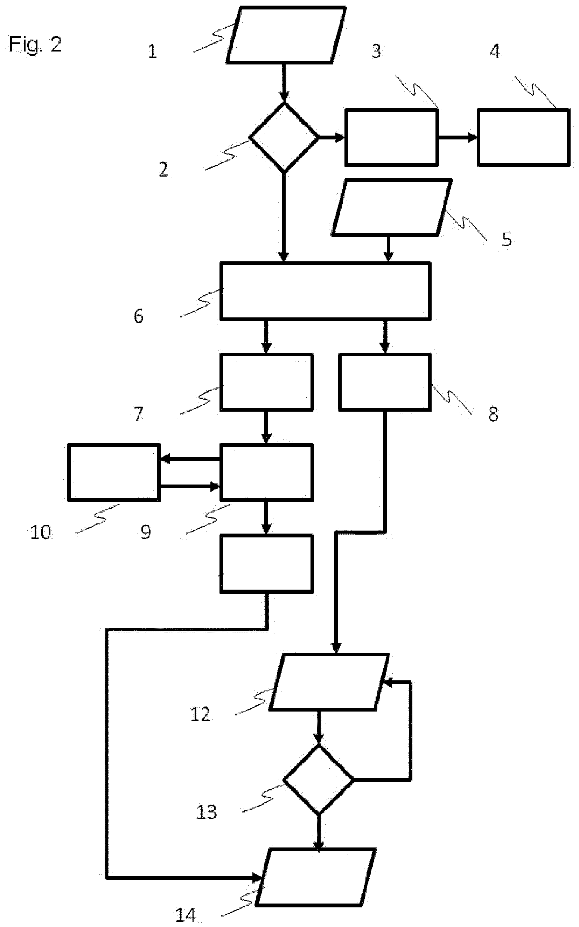

Fig 2 shows a flow chart of the method according to an embodiment of the invention.

The flowchart describes the procedure that take place in the connecting base station, which serves as edge cloud provider:
The base station receives many requests 1 from mobile nodes to use the edge cloud. If the base station has the capacity 2, the request is accepted 6 otherwise the request is rejected 3 and the base station will introduce the mobile node to a neighboring base station 4.

To complete the processing task additional processing data from other cells may also be received 5 when accepting the request and preparing it for processing 6.The process of finding the next nearest and best station 7 starts in parallel to the processing of the data 8 .

The possible routes are estimated and/or predicted 9. The system uses the user history 10 and/or machine learning (not shown) to determine the behavior of mobile user device in changing the location and based on the history takes into account the routes which have been frequently used by the mobile user device in the past, e. g. the way to home or to work.

The possible routes used to distribute the processing and/or the processed data along the routes of the mobile user device and the processed data is sent to the mobile user device 12. If user keep distancing 13 from the base station and it still needs to use edge cloud all the data of the mobile user device would be delivered to the next and nearest base station 14 otherwise the data would be continued to be delivered to the mobile user device 12.

### The embodiments of the system according to the invention offer the following advantages:

The use the location of the mobile user device and without estimation of the next edge cloud provider, the latency of transferring to the edge cloud is reduced and allows for economical transfer of more computations.

Based on the speed of the node the system according to the invention would find the next most optimized edge network. This scenario is realized, e.g. for a smartphone used in a train.

Other aspects, features, and advantages will be apparent from the summary and the description above, as well as that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### References

[1] H. M. Patel, Y. Hu, P. Hédé, I. B. M. J. Joubert, C. Thornton, B. Naughton, I. Julian, R. Ramos, C. Chan, V. Young, S. J. Tan, and D. Lynch, "Mobile-Edge Computing (#9)," ETSI White Pap., vol. 11, no. 1, pp. 1-36, 2014.
[2] M. Gerla, "Vehicular Cloud Computing," in 2012 The 11th Annual Mediterranean Ad Hoc Networking Workshop (Med-Hoc-Net), 2012, pp. 152-155.
[3] M. H. Chen, M. Dong, and B. Liang, "Joint offloading decision and resource allocation for mobile cloud with computing access point," in ICASSP, IEEE International Conference on Acoustics, Speech and Signal Processing - Proceedings, 2016, vol. 2016-May, pp. 3516-3520.
[4] K. Zhang, Y. Mao, S. Leng, Q. Zhao, L. Li, X. Peng, L. Pan, S. Maharjan, and Y. Zhang, "Energy-efficient offloading for mobile edge computing in 5G heterogeneous networks," IEEE Access, vol. PP, no. 99, 2016.
[5] Y. Mao, J. Zhang, and K. B. Letaief, "Dynamic Computation Offloading for Mobile-Edge Computing with Energy Harvesting Devices," arXiv Prepr. arXiv1605.05488, vol. 8716, no. 16200214, pp. 1-33, 2016.
[6] G. Orsini, D. Bade, and W. Lamersdorf, "Computing at the Mobile Edge: Designing Elastic Android Applications for Computation Offloading," in Proceedings - 2015 8th IFIP Wireless and Mobile Networking Conference, WMNC 2015, 2016, pp. 112-119.
[7] U. Drolia, R. Martins, J. Tan, A. Chheda, M. Sanghavi, R. Gandhi, and P. Narasimhan, "The case for mobile edge-clouds," in Proceedings - IEEE 10th International Conference on Ubiquitous Intelligence and Computing, UIC 2013 and IEEE 10th International Conference on Autonomic and Trusted Computing, ATC 2013, 2013, pp. 209-215.
[8] X. Chen, L. Jiao, W. Li, and X. Fu, "Efficient multi-user computation offloading for mobile-edge cloud computing," IEEE/ACM Trans. Netw., vol. PP, no. 99, 2015.

## Claims

1. Method for finding a next edge cloud for a mobile user device (100) in a mobile communication network for cloud processing,
wherein the network comprises at least two base stations (201, 202, 203) with computing access point functionality and the base stations being part of a mobile edge computing, MEC, cloud,
wherein the method comprises the steps of:
a) the mobile user device (100) sending a request for usage privilege for cloud processing to a connecting base station,
b) the connecting base station accepting the cloud processing request,
c) the mobile user device (100) offloading computation processing data to the mobile edge computing cloud via the connecting base station and the mobile user device (100) also sending current localization information of the mobile user device to the connecting base station,
d) the mobile edge computing cloud processing the computation processing data and determining an expected next base station based on the received localization information,
e) the mobile edge computing cloud delivering the processed computation processing data to the determined expected next base station, when the user mobile device (100) has moved from the network cell serviced by the connecting base station to the network cell of the determined expected next base station or to the connecting base station, when the mobile user device (100) has not moved out of the network cell serviced by the connecting base station;
wherein in step e) the mobile edge computing cloud predicts a possible route of the mobile user device (100) based on the current localization information of the mobile user device and based on a history of localization information of the mobile user device (100) with a machine learning algorithm, and
wherein for each mobile user device (100) a history of localization is stored in the mobile edge computing cloud.

2. The method of claim 1,
wherein the localization information comprises information about a position of the mobile user device (100), preferably a GPS position the mobile user device (100), and/or navigation data about a route or destination of the mobile user device.

3. The method of claims 1 or 2,
wherein the localization information comprises information navigation data about a route or destination of the mobile user device (100).

4. The method of any one of claims 1 to 3,
wherein after step a) the connecting base station determines based on usage capacity of the mobile edge computing cloud and/or the connecting base station whether the request for usage privilege is accepted or not.

5. The method of claim 4,
wherein the request for usage privilege is forwarded by the connecting base station to a neighboring base station and the neighboring base station becomes the connecting base station.

6. System for finding a next edge cloud for a mobile user device (100) in a mobile communication network for cloud processing,
wherein the network comprises at least two base stations (201, 202, 203) with computing access point functionality and the base stations being part of a mobile edge computing, MEC, cloud,
wherein the system comprises a request reception unit formed at each base station (201, 202, 203), which is configured to receive a request for usage privilege for cloud processing sent from the mobile user device (100) to a connecting base station,
wherein the system further comprises a request evaluation unit formed at each base station (201, 202, 203), which is configured to determine based on usage capacity of the mobile edge computing cloud and/or the connecting base station whether the request for usage privilege is accepted or not, wherein the mobile user device (100) is included in the system and is configured to offload the computation processing data to the mobile edge computing cloud via the connecting base station and the mobile user device is also configured to send current localization information of the mobile user device to the base station,
wherein the mobile edge computing cloud is included in the system and is configured to process the computation processing data,
wherein the system comprises a prediction unit, formed at the mobile edge computing cloud, which is configured to determine an expected next base station based on the received localization information, and
wherein the mobile edge computing cloud is configured to deliver the processed computation processing data to the determined expected next base station, when the user mobile device (100) has moved from the network cell serviced by the connecting base station to the network cell of the determined expected next base station or to the connecting base station, when the mobile user device (100) has not moved out of the network cell serviced by the connecting base station, wherein the prediction unit is configured to predict a possible route of the mobile user device (100) based on the current localization information of the mobile user device (100) and based on a history of localization information of the mobile user device (100) with a machine learning algorithm, and
wherein for each mobile user device (100) a history of localization is stored in the mobile edge computing cloud.

7. The system of claim 6,
wherein the request evaluation unit is configured to forward the request for usage privilege to a neighboring base station and the neighboring base station becomes the connecting base station, when the request cannot be accepted at the current connecting base station.

8. The system of claim 6 or 7,
wherein the localization information comprises information about a position of the mobile user device (100), preferably a GPS position the mobile user device, and/or navigation data about a route or destination of the mobile user device (100).

9. The system of any one of claims 6 to 8,
wherein the localization information comprises information navigation data about a route or destination of the mobile user device (100).

## Patentansprüche

1. Verfahren zum Finden einer nächsten Rand-Cloud für eine mobile Benutzervorrichtung (100) in einem Mobilkommunikationsnetzwerk zur Cloud-Verarbeitung,
wobei das Netzwerk mindestens zwei Basisstationen (201, 202, 203) mit einer Rechenzugangspunktfunktionalität aufweist und die Basisstationen Teil einer Mobilrandverarbeitungs-, MEC, Cloud sind,
wobei das Verfahren die Schritte aufweist:
a) die mobile Benutzervorrichtung (100) sendet eine Anforderung einer Nutzungsberechtigung einer Cloud-Verarbeitung an eine Verbindungsbasisstation,
b) die Verbindungsbasisstation akzeptiert die Cloud-Verarbeitungs-Anforderung,
c) die mobile Benutzervorrichtung (100) lädt Rechenverarbeitungsdaten über die Verbindungsbasisstation zur Mobilrandverarbeitungs-Cloud ab und die mobile Benutzervorrichtung (100) sendet außerdem gegenwärtige Lokalisierungsinformationen der mobilen Benutzervorrichtung an die Verbindungsbasisstation,
d) die Mobilrandverarbeitungs-Cloud verarbeitet die Rechenverarbeitungsdaten und bestimmt eine erwartete nächste Basisstation beruhend auf den empfangenen Lokalisierungsinformationen,
e) die Mobilrandverarbeitungs-Cloud liefert die verarbeiteten Rechenverarbeitungsdaten an die bestimmte erwartete nächste Basisstation, wenn sich die mobile Benutzervorrichtung (100) von der durch die Verbindungsbasisstation bedienten Netzwerkzelle zur Netzwerkzelle der bestimmten erwarteten nächsten Basisstation bewegt hat, oder an die Verbindungsbasisstation, wenn sich die mobile Benutzervorrichtung (100) nicht aus der durch die Verbindungsbasisstation bedienten Netzwerkzelle heraus bewegt hat;
wobei im Schritt e) die Mobilrandverarbeitungs-Cloud beruhend auf den gegenwärtigen Lokalisierungsinformationen der mobilen Benutzervorrichtung und beruhend auf einem Verlauf der Lokalisierungsinformationen der mobilen Benutzervorrichtung (100) mit einem Maschinenlernalgorithmus eine mögliche Route der mobilen Benutzervorrichtung (100) vorhersagt, und
wobei für jede mobile Benutzervorrichtung (100) ein Lokalisierungsverlauf in der Mobilrandverarbeitungs-Cloud gespeichert ist.

2. Verfahren nach Anspruch 1,
wobei die Lokalisierungsinformationen Informationen über eine Position der mobilen Benutzervorrichtung (100), vorzugsweise eine GPS-Position der mobilen Benutzervorrichtung (100), und/oder Navigationsdaten über eine Route oder ein Ziel der mobilen Benutzervorrichtung aufweisen.

3. Verfahren nach Anspruchs 1 oder 2,
wobei die Lokalisierungsinformationen Navigationsdateninformationen über eine Route oder ein Ziel der mobilen Benutzervorrichtung (100) aufweisen.

4. Verfahren nach einem der Ansprüche 1 bis 3,
wobei nach Schritt a) die Verbindungsbasisstation beruhend auf einer Nutzungskapazität der Mobilrandverarbeitungs-Cloud und/oder der Verbindungsbasisstation bestimmt, ob die Anforderung einer Nutzungsberechtigung akzeptiert wird oder nicht.

5. Verfahren nach Anspruch 4,
wobei die Anforderung einer Nutzungsberechtigung durch die Verbindungsbasisstation an eine benachbarte Basisstation weitergeleitet wird und die benachbarte Basisstation die Verbindungsbasisstation wird.

6. System zum Finden einer nächsten Rand-Cloud für eine mobile Benutzervorrichtung (100) in einem Mobilkommunikationsnetzwerk zur Cloud-Verarbeitung,
wobei das Netzwerk mindestens zwei Basisstationen (201, 202, 203) mit einer Rechenzugangspunktfunktionalität aufweist und die Basisstationen Teil einer Mobilrandverarbeitungs-, MEC, Cloud sind,
wobei das System eine an jeder Basisstation (201, 202, 203) ausgebildete Anforderungsempfangseinheit aufweist, die konfiguriert ist, eine Anforderung einer Nutzungsberechtigung einer Cloud-Verarbeitung zu empfangen, die von der mobilen Benutzervorrichtung (100) an eine Verbindungsbasisstation gesendet wird,
wobei das System ferner eine an jeder Basisstation (201, 202, 203) ausgebildete Anforderungsauswertungseinheit aufweist, die konfiguriert ist, beruhend auf einer Nutzungskapazität der Mobilrandverarbeitungs-Cloud und/oder der Verbindungsbasisstation zu bestimmen, ob die Anforderung einer Nutzungsberechtigung akzeptiert wird oder nicht,
wobei die mobile Benutzervorrichtung (100) im System enthalten und konfiguriert ist, die Rechenverarbeitungsdaten über die Verbindungsbasisstation zur Mobilrandverarbeitungs-Cloud abzuladen, und die mobile Benutzervorrichtung außerdem konfiguriert ist, gegenwärtige Lokalisierungsinformationen der mobilen Benutzervorrichtung an die Basisstation zu senden,
wobei die Mobilrandverarbeitungs-Cloud im System enthalten und konfiguriert ist, die Rechenverarbeitungsdaten zu verarbeiten,
wobei das System eine an der Mobilrandverarbeitungs-Cloud ausgebildete Vorhersageeinheit aufweist, die konfiguriert ist, eine erwartete nächste Basisstation beruhend auf den empfangenen Lokalisierungsinformationen zu bestimmen, und
wobei die Mobilrandverarbeitungs-Cloud konfiguriert ist, die verarbeiteten Rechenverarbeitungsdaten an die bestimmte erwartete nächste Basisstation, wenn sich die mobile Benutzervorrichtung (100) von der durch die Verbindungsbasisstation bedienten Netzwerkzelle zur Netzwerkzelle der bestimmten erwarteten nächsten Basisstation bewegt hat, oder an die Verbindungsbasisstation zu liefen, wenn sich die mobile Benutzervorrichtung (100) nicht aus der durch die Verbindungsbasisstation bedienten Netzwerkzelle heraus bewegt hat,
wobei die Vorhersageeinheit konfiguriert ist, eine mögliche Route der mobilen Benutzervorrichtung (100) beruhend auf den gegenwärtigen Lokalisierungsinformationen der mobilen Benutzervorrichtung (100) und beruhend auf einem Verlauf der Lokalisierungsinformationen der mobilen Benutzervorrichtung (100) mit einem Maschinenlernalgorithmus vorherzusagen, und
wobei für jede mobile Benutzervorrichtung (100) ein Lokalisierungsverlauf in der Mobilrandverarbeitungs-Cloud gespeichert ist.

7. System nach Anspruch 6,
wobei die Anforderungsauswertungseinheit konfiguriert ist, die Anforderung einer Nutzungsberechtigung an eine benachbarte Basisstation weiterzuleiten und die benachbarte Basisstation die Verbindungsbasisstation wird, wenn die Anforderung an der gegenwärtigen Verbindungsbasisstation nicht akzeptiert werden kann.

8. System nach Anspruch 6 oder 7,
wobei die Lokalisierungsinformationen Informationen über eine Position der mobilen Benutzervorrichtung (100), vorzugsweise eine GPS-Position der mobilen Benutzervorrichtung, und/oder Navigationsdaten über eine Route oder ein Ziel der mobilen Benutzervorrichtung (100) aufweisen.

9. System nach einem der Ansprüche 6 bis 8,
wobei die Lokalisierungsinformationen Navigationsdateninformationen über eine Route oder ein Ziel der mobilen Benutzervorrichtung (100) aufweisen.

## Revendications

1. Procédé de recherche d'un nuage périphérique suivant pour un dispositif utilisateur mobile (100) dans un réseau de communication mobile pour un traitement en nuage,
le réseau comprenant au moins deux stations de base (201, 202, 203) à fonctionnalité de point d'accès informatique, lesdites stations de base faisant partie d'un nuage d'ordinateur de bord mobile MEC,
où ledit procédé comprend les étapes suivantes :
a) le dispositif utilisateur mobile (100) émet une demande de privilège d'utilisation pour un traitement en nuage à une station de base connectée,
b) la station de base connectée accepte la demande de traitement en nuage,
c) le dispositif utilisateur mobile (100) décharge des données de traitement de calcul vers le nuage d'ordinateur de bord mobile via la station de base connectée et le dispositif utilisateur mobile (100) transmet également à la station de base connectée des informations de localisation actuelles du dispositif utilisateur mobile,
d) le nuage d'ordinateur de bord mobile traite les données de traitement de calcul et détermine une station de base suivante attendue sur la base des informations de localisation reçues,
e) le nuage d'ordinateur de bord mobile fournit les données de traitement de calcul traitées à la station de base suivante attendue déterminée si le dispositif utilisateur mobile (100) s'est déplacé de la cellule de réseau desservie par la station de base connectée à la cellule de réseau de la station de base suivante attendue déterminée ou à la station de base connectée, si le dispositif utilisateur mobile (100) n'a pas quitté la cellule de réseau desservie par la station de base connectée ;
où, lors de l'étape e), le nuage d'ordinateur de bord mobile prévoit un itinéraire possible du dispositif utilisateur mobile (100) sur la base des informations de localisation actuelles du dispositif utilisateur mobile et sur la base d'un historique des informations de localisation du dispositif utilisateur mobile (100) par un algorithme d'apprentissage automatique, et
où, pour chaque dispositif utilisateur mobile (100), un historique de localisation est mémorisé dans le nuage d'ordinateur de bord mobile.

2. Procédé selon la revendication 1,
où les informations de localisation comprennent des informations relatives à une position du dispositif utilisateur mobile (100), préférentiellement une position GPS du dispositif utilisateur mobile (100), et/ou des données de navigation relatives à un itinéraire ou une destination du dispositif utilisateur mobile.

3. Procédé selon la revendication 1 ou la revendication 2,
où les informations de localisation comprennent des informations de données de navigation relatives à un itinéraire ou une destination du dispositif utilisateur mobile (100).

4. Procédé selon l'une des revendications 1 à 3,
où, après l'étape a), la station de base connectée détermine sur la base d'une capacité d'utilisation du nuage d'ordinateur de bord mobile et/ou de la station de base connectée si la demande de privilège d'utilisation est acceptée ou non.

5. Procédé selon la revendication 4,
où la demande de privilège d'utilisation est transmise par la station de base connectée à une station de base voisine, et la station de base voisine devient la station de base connectée.

6. Système de recherche d'un nuage périphérique suivant pour un dispositif utilisateur mobile (100) dans un réseau de communication mobile pour un traitement en nuage,
où le réseau comprend au moins deux stations de base (201, 202, 203) à fonctionnalité de point d'accès informatique, lesdites stations de base faisant partie d'un nuage d'ordinateur de bord mobile MEC,
où ledit système comprend une unité de réception de demande formée sur chaque station de base (201, 202, 203), prévue pour recevoir une demande de privilège d'utilisation pour un traitement en nuage adressée par le dispositif utilisateur mobile (100) à une station de base connectée,
où ledit système comprend en outre unité d'évaluation de demande formée sur chaque station de base (201, 202, 203), prévue pour déterminer sur la base d'une capacité d'utilisation du nuage d'ordinateur de bord mobile et/ou de la station de base connectée si la demande de privilège d'utilisation est acceptée ou non,
où le dispositif utilisateur mobile (100) est compris dans ledit système et est prévu pour décharger les données de traitement de calcul vers le nuage d'ordinateur de bord mobile via la station de base connectée, et où le dispositif utilisateur mobile est également prévu pour transmettre des informations de localisation actuelles du dispositif utilisateur mobile à la station de base,
où le nuage d'ordinateur de bord mobile est compris dans ledit système et est prévu pour traiter les données de traitement de calcul,
où ledit système comprend une unité de prédiction formée sur le nuage d'ordinateur de bord mobile, prévue pour déterminer une station de base suivante attendue sur la base des informations de localisation reçues, et
où le nuage d'ordinateur de bord mobile est prévu pour fournir les données de traitement de calcul traitées à la station de base suivante attendue déterminée, si le dispositif utilisateur mobile (100) s'est déplacé de la cellule de réseau desservie par la station de base connectée à la cellule de réseau de la station de base suivante attendue déterminée ou à la station de base connectée, si le dispositif utilisateur mobile (100) n'a pas quitté la cellule de réseau desservie par la station de base connectée,
où l'unité de prédiction est prévue pour prévoir un itinéraire possible du dispositif utilisateur mobile (100) sur la base des informations de localisation actuelles du dispositif utilisateur mobile (100) et sur la base d'un historique des informations de localisation du dispositif utilisateur mobile (100) par un algorithme d'apprentissage automatique, et
où, pour chaque dispositif utilisateur mobile (100), un historique de localisation est mémorisé dans le nuage d'ordinateur de bord mobile.

7. Système selon la revendication 6,
où l'unité d'évaluation de demande est prévue pour transmettre la demande de privilège d'utilisation à une station de base voisine, et où la station de base voisine devient la station de base connectée si la demande ne peut être acceptée sur la station de base connectée actuelle.

8. Système selon la revendication 6 ou la revendication 7,
où les informations de localisation comprennent des informations relatives à une position du dispositif utilisateur mobile (100), préférentiellement une position GPS du dispositif utilisateur mobile, et/ou des données de navigation relatives à un itinéraire ou une destination du dispositif utilisateur mobile (100).

9. Système selon l'une des revendications 6 à 8,
où les informations de localisation comprennent des informations de données de navigation relatives à un itinéraire ou une destination du dispositif utilisateur mobile (100).
